# EUROPÄISCHE PATENTSCHRIFT

(11) **EP 0 599 431 B1**
(45) Veröffentlichungstag und Bekanntmachung des Hinweises auf die Patenterteilung: **15.01.1997**
(21) Anmeldenummer: 93250045.7
(22) Anmeldetag: 09.02.1993
(51) Int. Cl.: C21C 5/52, F27B 3/06, F27D 3/00

(54) **Stahlwerksanlage mit einem metallurgischen Gefäss, welches an einem ringförmigen Tragelement befestigt ist**
Steel plant incorporating a metallurgical vessel mounted in a circular support ring
Installation de production d'acier comprenant un récipient metallurgique supporté par un élément annulaire

(30) Priorität: 24.11.1992 DE 4240667
(43) Veröffentlichungstag der Anmeldung: 01.06.1994
(73) Patentinhaber: MANNESMANN Aktiengesellschaft, 40027 Düsseldorf (DE)
(72) Erfinder: Meierling, Peter, Dr., D-40489 Düsseldorf (DE)
(74) Vertreter: Presting, Hans-Joachim, Dipl.-Ing.

(56) Entgegenhaltungen:
- WO-A-90/06481
- WO-A-92/10594
- DE-A- 3 308 486
- DE-B- 1 062 895
- DE-B- 1 758 776
- FR-A- 2 076 116
- STEEL TIMES INTERNATIONAL - INCORPORATING IRON & STEEL INTERNATIONAL Bd. 15, Nr. 2 , März 1991 , ENGLAND GB Seiten 44 - 46 XP000179081 PROFESSOR TEOH 'I(mproving envoromental performance in mini-mills'

## Beschreibung

Die Erfindung betrifft eine Stahlwerksanlage mit einem an einem Tragring befestigten mit einem Deckel verschenen metallurgischen Gefäß, gemäß dem Oberbegriff des Patentanspruchs 1.

Neben den allgemein üblichen Konvertern in Blasstahlwerken, die in um eine horizontale Achse drehbaren Tragringen angeordnet sind, sind Sonderformen von Gefäßen bekannt.

Eine Stahlwerksanlage mit den im Oberbegriff des Patentanspruchs 1 genannten Merkmalen ist aus der WO-A-90/06481 bekannt.

Aus der DE-B-10 62 895 ist es darüber hinaus bekannt, die Elektroden mit dem Kippantrieb so zu verbinden, daß die Elektroden beim Ankippen des Ofens mitkippen.

Ferner ist in der Schrift DE PS 34 19 030 ein metallurgisches Reaktionsgefäß vorgeschlagen worden, das mit einem Deckel abdeckbar ist, das im Boden eine verschließbare Abstichöffnung aufweist und das in einer Halterung um eine vertikale Drehachse dreheinstellbar ist. Das aus diesen Schriften bekannte Reaktionsgefäß eignet sich nicht als Lichtbogenofen. Bei ihm lassen sich keine Elektroden, und zwar weder für Wechsel- noch für Gleichstrom, anbringen, noch läßt es sich für eine sog. Sumpffahrweise bei Lichtbogenöfen einsetzen. Darüber hinaus ist ein Wechsel des metallurgischen Gefäßes ausschließlich nach oben möglich, wobei der gesamte Überbau oberhalb des Gefäßes zu demontieren ist.

Weiterhin ist aus der Schrift DE OS 33 32 970 ein Reaktor bekannt, der aus einem mit resistentem Material ausgekleideten Gefäßunterteil und einem gekühlten, metallischen Gefäßoberteil besteht. Beide Gefäßteile sind relativ zueinander auseinander bewegbar, wobei eine ringförmige Dichtung aufhebbar ist. In verschiedenen Ausführungsformen ist entweder das gesamte Gefäß kippbar oder beide Teile sind voneinander trennbar und nur das untere Teil wird um eine horizontale Achse geschwenkt.

Auch dieses Gefäß eignet sich nicht zum Schmelzen von Möller, insbesondere von Schrott, mit einer oder mehreren Elektroden. Das in einem üblichen Kippgestell gelagerte Reaktionsgefäß ist für die Verbrennung von Abfällen, wie z. B. von Müll und Klärschlamm, sowie von überproduzierter Kohle vorgesehen und ist somit weder von der Form noch von der Betriebsweise mit einem Lichtbogenofen vergleichbar.

Die Kippbewegung bei kippbaren Lichtbogenöfen wird gewöhnlich über eine Wippe durchgeführt. Darüber hinaus ist aus der Schrift EP 0 121 393 A1 ein metallurgisches Gefäß bekannt, das einen wippenartigen Unterbau aufweist, der auf Drehrollen gelagert ist und mittels einer Kolbenzylindereinheit schwenkbar ist. Bei dieser Bauweise ist aber die Anordnung eines Bodenabstichs nicht möglich. Außerdem ist dieses Gefäß nicht nach unten ausbaubar ausgestaltet.

Die Erfindung hat sich zum Ziel gesetzt, eine Stahlwerksanlage zu schaffen, die mit konstruktiv einfachen Mitteln eine nur geringe Bauhöhe der Stahlwerkshalle im Bereich eines Lichtbogenofens erfordert,

ein sicheres und schnelles Auswechseln des mit Feuerfestmaterial ausgekleideten Gefäßteils zuläßt und darüber hinaus bei Um- und Erweiterungsbauten die Verwendung von bereits vorhandenen Anlagenteilen ermöglicht.

Die Erfindung erreicht dieses Ziel durch die kennzeichnenden Merkmale des Anspruchs 1.

Beim Neubau, Umbau oder auch Erweiterungsbau von Stahlwerksanlagen stellt sich gerade in Zeiten einer Konjunkturflaute die Frage nach den Kosten. Hierzu ist neben dem Hauptaggregat, hier dem metallurgischen Gefäß, den übrigen Anlagenteilen besondere Aufmerksamkeit zu widmen. Dies gilt insbesondere bei Investitionen und bei der Frage, ob bereits bestehende Anlagenteile unmittelbar oder nur bei geringer Veränderung weiter verwendet werden können.

In der betrieblichen Praxis ist darüber hinaus festzustellen, daß häufig das Hauptaugenmerk auf die Optimierung nur einzelner Anlagenteile gelegt wird, beispielsweise wird der Verschleiß des Feuerfestmaterials in einem metallurgischen Gefäß minimiert. Dabei wird immer wieder weniger die Betriebsmittelnutzungszeit des Gesamtaggregates beachtet, die insbesondere durch einen schnellen Austausch von Einzelaggregaten erhöht werden kann.

Mit Hilfe der Erfindung wird es nunmehr möglich, eine gattungsgemäße Stahlwerksanlage mit einem Minimum an Aufwand und Kosten zu errichten. Bei der erfindungsgemäßen Stahlwerksanlage kann insbesondere beim Um- bzw. Erweiterungsbau auf vorhandene Anlagen zurückgegriffen werden. Dazu zählt die Hallenkonstruktion einschließlich der darin vorhandenen Hebezeuge, Teile der Chargenzufuhr sowie der üblicherweise vorhandenen Gasabzugseinrichtung.

Unabhängig von dem aktuell feststellbaren Trend, das klassische Konverterstahlwerk nicht mehr zu verwenden und stattdessen Elektrostahlwerke zur Stahlerzeugung einzusetzen, wobei sich insbesondere ein Umbau anbietet, ist die vorliegende Erfindung für Stahlwerksneubauten geeignet. Der Einsatz des vorgeschlagenen ringförmigen Tragelementes, an dem das Ofenuntergefäß eines Lichtbogenofens befestigbar ist, eröffnet die Möglichkeit, das Gefäßunterteil als Wechselgefäß auszugestalten. Die sonst üblichen Ofenstillstände bei einer Zustellung entfallen hierdurch.

Weiterhin ist nur eine einfache und niedrige Hallenkonstruktion bei der erfindungsgemäßen Stahlwerksanlage erforderlich. Erreicht wird dies durch einfache Zuführung des Charge, insbesondere des Schrottes durch dessen Aufnahme im Arbeitsbereich des Hallenkranes. Hinzu tritt die Ausbaumöglichkeit des Gefäßunterteils nach unten, das entweder durch ein bereits vorhandenes Gefäßwechselgefährt oder durch ein einfach errichtbares Gefäßaufnahmegerät durchführbar ist.

Bei der Chargen zufuhr wird der Schrott aus dem Bereich des Hallenkrans entweder mittels eines Schrottkorbes, der durch ein Fahrzeug oder einen Drehturm, bzw. durch ein Förderband in die Entladeposition gebracht, oder es wird der Ofen, nach Entfernung des Deckels und der Elektrode, über Schienen in den Arbeitsbereich des HalLenkranes gefahren. Bei der Verwendung von kleinen Schrottkörben bzw. bei der Möllerzufuhr über einen Endlosförderer ist eine kontinuierliche Beschickung des Ofens durchführbar.

Die Elektrodentrageinheit kann unabhängig vom Tragring auf der Stahlwerksbühne angeordnet sein und mit der Bewegung des Tragringes und somit des Lichtbogenofens korrespondieren. Geringe relative Bewegungen werden durch eine schlitzförmige Öffnung im Deckel ausgeglichen.

Die Elektrodentrageinheit ist in einer anderen Bauweise unmittelbar am Tragring zu befestigen. In der Wahl der exakten Befestigungsstelle der Tragsäule ist man frei. Beim Einsatz der Deckelhubvorrichtung, beispielsweise mit Hilfe eines Portalkranes, bietet sich die Anordnung des Tragarmes in Richtung des Verfahrweges des Portalkranes an. Die bevorzugte Befestigungsstelle der Elektrodentragsäule ist hierbei im Bereich des Bodenabstiches des Lichtbogenofens, soweit ein exzentrischer Bodenabstich Verwendung findet. In diesem Fall wird der Elektrodentragarm durch eine Kolben-Zylinder-Einheit bewegt, welcher am vom Tragring wegweisenden Fußende der Säule sich abstützt.

Der Deckel ist durch eine einfache Deckeltrageinheit vom Gefäßrand abhebbar und parallel zu ihm weglegbar. In einer Ausgestaltungsform geschieht das durch einen unabhängig vom Gefäß vorgesehenen Portalkran. In einer anderen Ausgestaltungsform wird dies durch eine am Tragring befestigte Hub- und Schwenkvorrichtung durchgeführt.

Der Deckel weist beim diskontinuierlichen Chargieren außer der Öffnung für die Elektroden ggf. noch eine Öffnung zum Absaugen der Rauchgase auf. Beim kontinuierlichen Chargieren sind vorzugsweise zwei weitere Öffnungen vorgesehen, die selbst wiederum durch Klappen o. ä. eine Schleuse bildende Verschlüsse verschließbar sind. Bei dieser Bauweise besteht darüber hinaus die Möglichkeit, die Abgase durch die Charge zu führen und damit eine Vorwärmung zu ermöglichen.

Der Lichtbogenofen ist von einer Einhausung umhüllbar, die eine torartige Öffnung aufweist, durch die der Schrottkorb zum Gefäßoberteil hin- und wegbewegbar ist. Während der Betriebsphase ist die Einhausung an die Entstaubungsanlage angeschlossen, so daß in der gesamten Einhausung ein Unterdruck vorherrscht.

Das Untergefäß des Lichtbogenofens ist vom unteren Rand des ringförmigen Tragelementes leicht lösbar. Zum Wechseln des Untergefäßes wird unter den Ofen ein Gefäßwechselgefährt gebracht, das über Hubelemente das mit Feuerfest ausgekleidete Ofenuntergefäß aufnehmen kann. In äußerst kurzer Zeit kann dabei ein außerhalb des Lichtbogenofens instandgesetztes Gefäßunterteil herangeschafft und am ringförmigen Tragelement mit einfachen Befestigungselementen angeordnet werden.

Das Gefäßoberteil weist einen Mantel auf, der metallisch ist und durch ein Kühlmedium gekühlt wird. Bei einem Wechsel des Ofenuntergefäßes verbleibt das Obergefäß des Ofens im ringförmigen Tragelement. Das ringförmige Tragelement kann als geschlossener Tragring ausgeführt sein. In einer besonderen Ausgestaltung kann das ringförmige Tragelement Öffnungen aufweisen, insbesondere dann, wenn eine besondere Zugänglichkeit zu den Abstichen gewünscht wird. Dabei kann das ringförmige Tragelement überwiegend geschlossen sein bis auf eine Ausnehmung, es kann aber auch aus zwei Ringsegmenten bestehen, die sich gegenüberliegen und fliegend gelagert sind.

Der ringförmige Tragelement kann, wie bei Tragringen in Konverterstahlwerken üblich, einen Drehantrieb aufweisen. In einer vorteilhaften Ausgestaltung wird an mindestens einem Tragzapfen ein Hebel angeordnet, der durch eine einfache Kolben-Zylinder-Einheit schwenkbar ist.

Ein Beispiel der Erfindung ist in der beiliegenden Zeichnung dargelegt. Es zeigen:
- Figur 1: Übersicht Stahlwerk mit verfahrbarem Schrottkorb
- Figur 2: Übersicht Stahlwerk mit schwenkbarem Schrottkorb
- Figur 3: Längsschnitt durch den Lichtbogenofen
- Figur 4: Querschnitt durch den Lichtbogenofen
- Figur 5: Draufsicht auf den Lichtbogenofen
- Figur 6: Horizontaler Schnitt durch einen Tragring
- Figur 7: Verfahrbarer Ofen

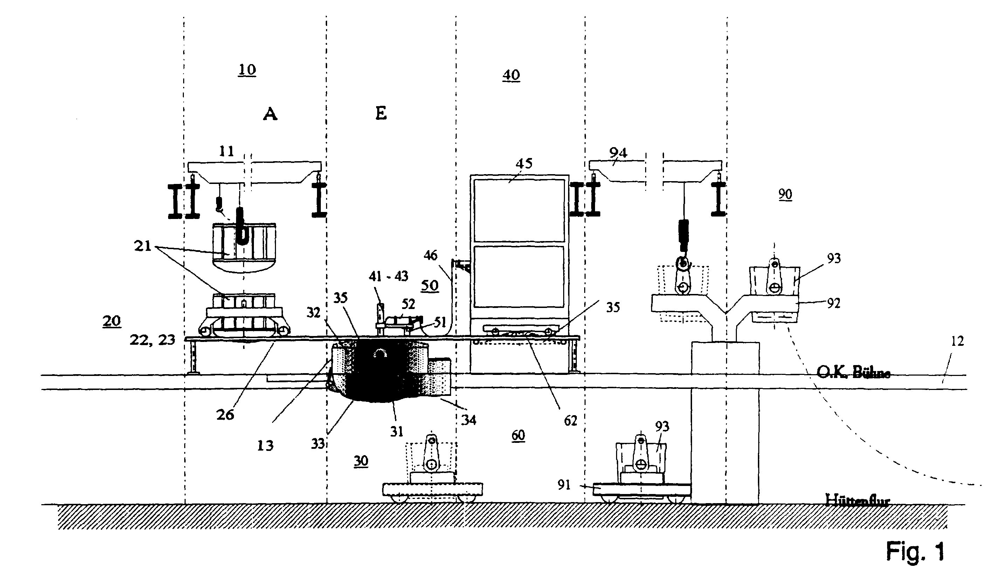

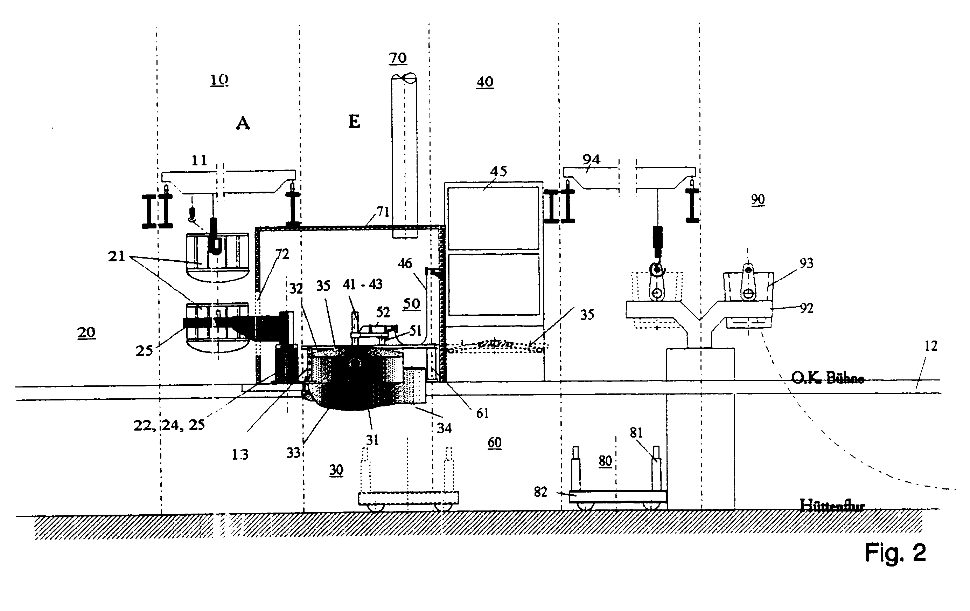

Die Figuren 1 und 2 zeigen eine Stahlwerksanlage 10 mit einer als Hallenkran 11 ausgebildeten Transportvorrichtung und einem sich auf einer Bühne 12 abstützenden ringförmigen Tragelement 13.

Eine Einrichtung zur Möllerzufuhr 20 weist einen Schrottkorb 21 auf, der in eine Vorrichtung 22 zum Chargen transport einlegbar ist. In der Figur 1 ist dies ein Schienenfahrzeug 23, das auf Schienen 26 bewegbar ist. In der Figur 2 ist diese Chargen zufuhreinrichtung 20 eine Drehvorrichtung 24, die einen Drehturm 25 aufweist, in dessen Arm Schrottkorb 21 absenkbar ist.

Am ringförmigen Tragelement 13 ist ein metallurgisches Gefäß 30 befestigt im vorliegenden Fall ein einen Bodenabstich 34 aufweisender Lichtbogenofen 31. Der Lichtbogenofen 31 besitzt ein Gefäßunterteil 33 und ein Gefäßtoberteil 32, welches durch einen Deckel 35 verschließbar ist.

Die Charge wird vom Arbeitsbereich A des Hallenkranes 11 in die Ladepositionen E oberhalb des Lichtbogenofens 31 gefördert.

Die Stahlwerksanlage weist ferner eine Energieversorgungsstation 40 auf mit der die Elektroden 41 - 43 mit elektrischem Strom versorgt werden. Der Strom wird dabei vom Transformatorenhaus 45 über die Stromzufuhr 46 zu den Elektroden geleitet.

Die Elektroden werden von einer Elektrodentrageinheit 50 gehalten, die eine Tragsäule 51 und einen Tragarm 52 aufweist.

Weiterhin ist eine Deckeltrageinheit 60 vorgesehen, die in der Figur 1 aus einem Portalkran 62 besteht, der auf Schienen 26 bewegbar ist und den Deckel 35 vom Ofengefäß in eine Parkposition befördert. In der Figur 2 ist diese Deckeltrageinheit 60 in Form einer Hub- und Schwenkvorrichtung 61 ausgebildet, wobei nach dem Schwenken der Deckel 35 wiederum in einer Parkposition ablegbar ist.

Ergänzend ist schematisch eine Stranggießanlage 90 dargestellt. Die Zufuhr der Schmelze geschieht hierbei durch Schmelzpfannen 93, die auf Hüttenfahrzeugen vom Lichtbogenofen nach dem Abstich in den Bereich eines Hüttenkrans 94 bringbar und von diesem in einem Drehturm 92 ablegbar sind.

In der Figur 2 ist eine nicht näher aufgeführte Absaugung 70 dargestellt, die mit einer Einhausung 71 in Verbindung steht, welche eine torartige Öffnung 72 aufweist.

Darüber hinaus ist in der Figur 2 unterhalb der Bühne 12 auf Hüttenflur ein Gefäßwechselgefährt 80 aufgeführt, welches ein Fahrgestell B2 aufweist, auf dem Hubelemente 81 zur Aufnahme des Gefäßunterteils 33 vorgesehen sind.

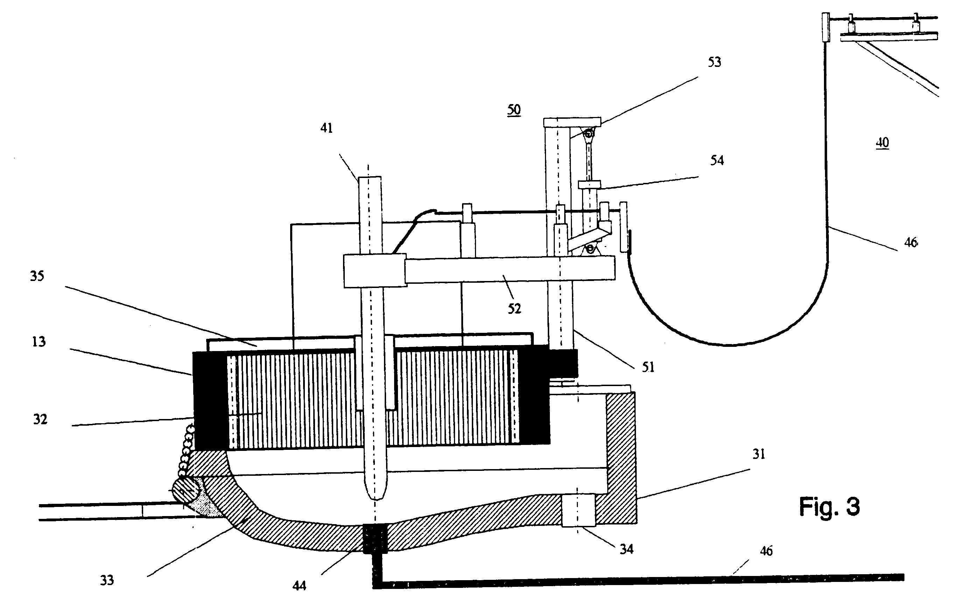

Die Figur 3 zeigt einen Längsschnitt durch das Gefäßoberteil 32 und das Gefäßunterteil 33 des einen exzentrischen Bodenabstich 34 aufweisenden Lichtbogenofens 31. Das Obergefäß 32 ist in dem ringförmigen Tragelement 13 befestigt und wird durch einen Deckel 35 verschlossen. Am ringförmigen Tragelement 13 im Bereich des Bodenabstichs 34 ist die Elektrodentrageinheit 50 befestigt, sie weist dabei die Tragsäule 51 auf, an der in Längsrichtung der Tragarm 52 verfahrbar ist und an dessen Kopfende die Elektrode 41 befestigt ist. Der Tragarm 52 wird dabei durch eine Kolben-Zylinder-Einheit 54 bewegt, welche am Fußende 53 der Tragsäule 51 und am Tragarm 52 befestigt ist.

In der Figur 3 ist ein Gleichstromofen dargestellt mit einer im Gefäßunterteil 33 angeordneten Bodenelektrode 44. Die in das Ofengefäß hineinragende Elektrode 41 wie auch die Bodenelektrode 44 sind über Stromzuführleitungen 46 mit einer nicht näher dargestellten Energieversorgungsanlage 40 energiemäßig verbunden.

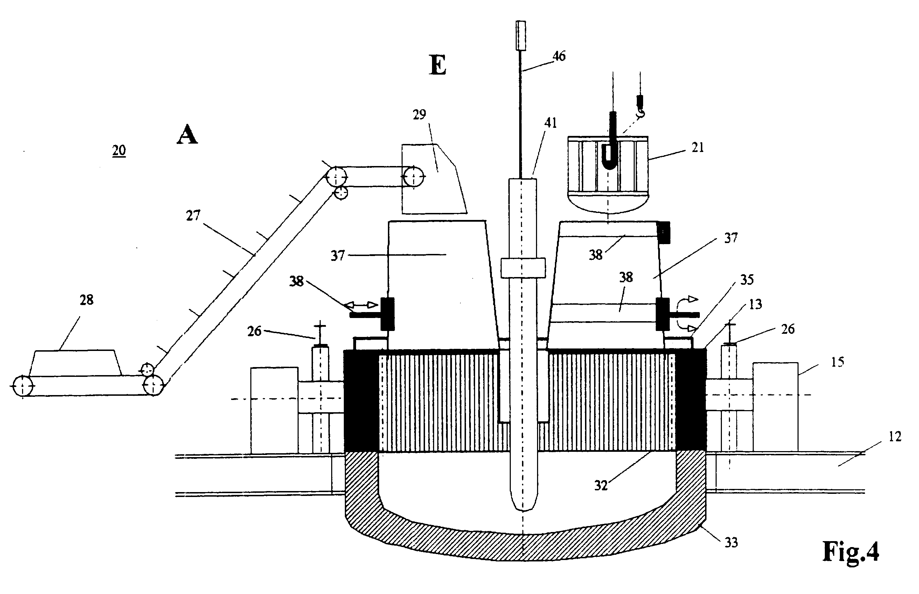

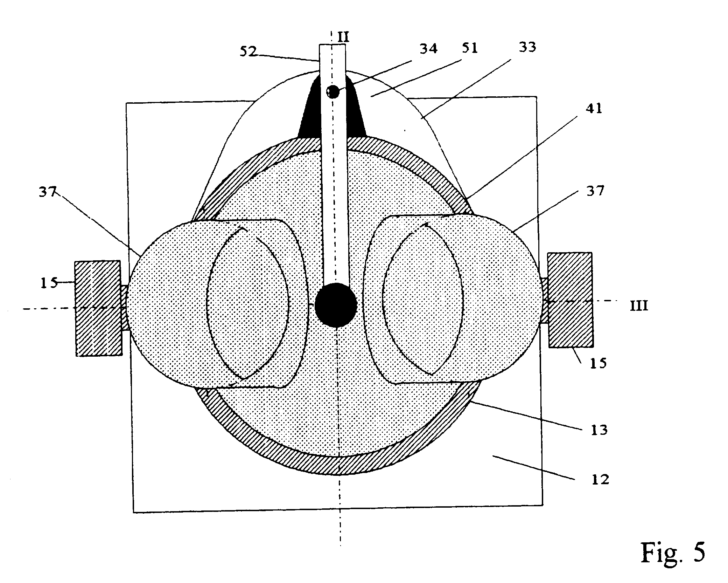

Die Figuren 4 und 5 zeigen ein Ofengefäß mit einem Deckel zur kontinuierlichen Beschickung. Der Deckel 35 weist dabei zwei Öffnungen 37 auf. Im linken Teil des Bildes der Figur 4 ist ein Stetigförderer der Möllerzufuhr 20 in Form eines Endlosbandes 27 dargestellt mit der Aufnahme 28 und der Übergabe 29. Die Übergabe 29 ist als gasdichte Schleuse ausgestaltbar. In der Öffnung 37 ist auf der linken Seite darüber hinaus eine Verschlußvorrichtung 38 in Form eines Schiebers vorgesehen.

Auf der rechten Seite ist die Chargierung mittels eines Schrottkorbes 21 vorgesehen, der im Vergleich zur diskontinuierlichen Chargierung relativ klein ausgeführt ist. Der Schrottkorb 21 fördert in eine Deckelöffnung 37, die durch zwei Verschlußeinrichtungen 38, hier in Form von Klappen, eine Schleuse bildend den Lichtbogenofen 31 zur Umgebung hin verschließen.

Zwischen den beiden Öffnungen 37 ist die an die Stromversorgung 46 angeschlossenen Elektrode 41 vorgesehen. Die Elektrode 41 ragt dabei in den Lichtbogenofen 31 hinein, dessen Obergefäß 32 innerhalb des ringförmigen Tragelements 13 vorgesehen ist, der auf Lagern 15 ruht.
Angedeutet ist noch ein Schienenpaar 26, über die eine Deckeltrageinheit 62 führbar ist. Die Schienen 26 und die Lager 15 stützen sich auf der Ofenbühne 12 ab. Bühne 12 weist dabei eine Öffnung auf, durch die das unterhalb des ringförmigen Tragelements 13 angeordnete Gefäßunterteil 33 Richtung Hüttenflur demontierbar ist.

In der Figur 5 ist in der Draufsicht ergänzend der Tragarm 52 dargestellt, der an einer nicht weiter dargestellten Tragsäule 51 verfahrbar angeordnet ist, welcher im Bereich des Bodenabstichs 34 am ringförmigen Tragelement 13 befestigt ist.

Weiterhin aufgezeigt sind die Längsachse II und die durch die Lager führende Schwenkachse III.

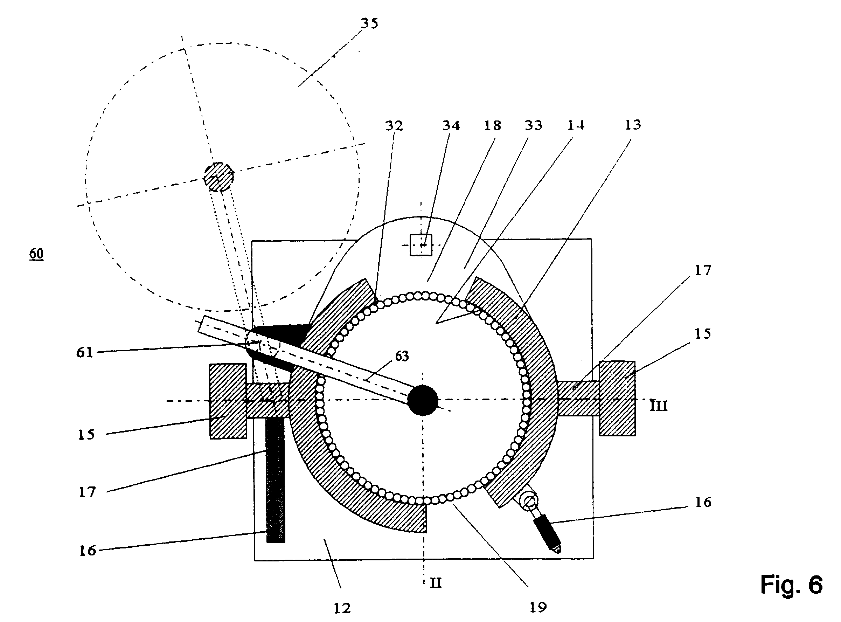

Die Figur 6 zeigt eine Deckeltrageinrichtung 60 in Form des Hub- und Schwenkwerkes 61 mit dem Schwenkarm 63, an der der Deckel 35 befestigt ist.

Dargestellt sind weiterhin in der Draufsicht der Innenmantel 14 des Gefäßoberteils 32 und der exzentrische Vorbau des Gefäßunterteils 33 mit dem Bodenabstich 34. Das ringförmige Tragelement 13 ist über Zapfen 17 in Lagern 15 gelagert und um die Schwenkachse III schwenkbar.

Auf der linken Seite des Bildes ist der Zapfen 17 hebelförmig ausgebildet und durch eine Kolben-Zylinder-Einheit 16 bewegbar.

Weiterhin ist in der linken Seite das ringförmige Tragelement 13 mit einer Öffnung 18 versehen.

In der rechten Seite besteht das ringförmige Tragelement 13 aus zwei fliegend gelagerten Ringteilen, wobei im Bereich des Bodenabstichs 34 eine Öffnung 18 und im Bereich des Schlackeabstichs eine Öffnung 19 vorgesehen ist. Im ringförmigen Tragelement 13, unabhängig von einer Öffnung 18 oder von zwei Öffnungen 18 und 19 ist am Innenmantel 14 des ringförmigen Tragelements 13 das aus Kühlelementen aufgebaute Gefäßoberteil 32 angeordnet.

In der rechten Seite der Figur 6 ist die Kolben-Zylinder-Einheit 16 zum Schwenken des ringförmigen Tragelements 13 unmittelbar am ringförmigen Tragelement 13 befestigt. Die Kolben-Zylinder-Einheit 16 stützt sich dabei auf der Bühne 12 ab.

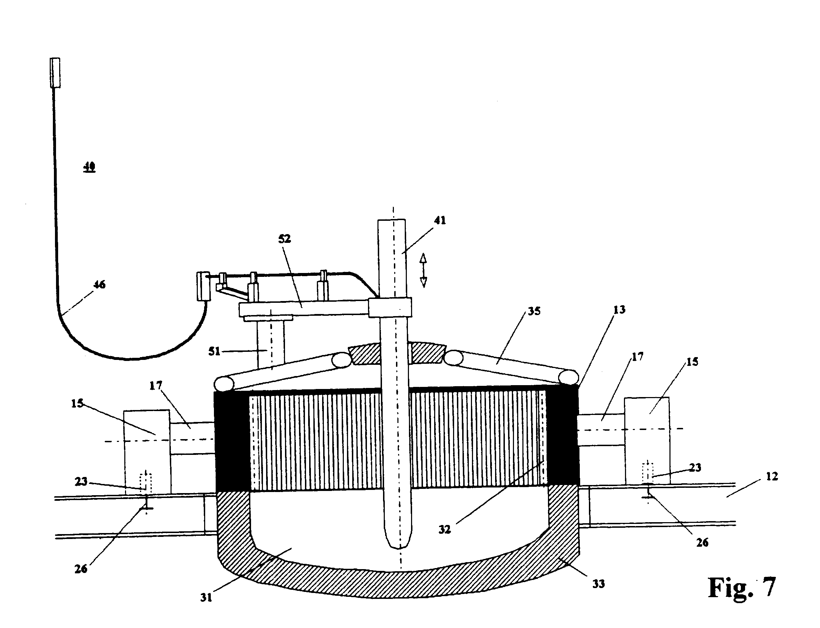

In der Figur 7 ist im wesentlichen ein Tragarm dargestellt, der über Zapfen 17 in Lagern 15 gelagert ist. Die Lager 15 sind mit Rädern eines Schienenfahrzeugs 23 auf Schienen 26 bewegbar. Hierzu ist die Elektrode 41 aus dem aus dem Obergefäß 32 und Untergefäß 33 bestehenden Lichtbogenofen 31 herauszuziehen. Vorzugsweise geschieht dies durch gleichzeitiges Anheben des Deckels 35.

### Positionsliste

- 10: Stahlwerksanlage
- 11: Transportvorrichtung
- 12: Stahlwerksbühne
- 13: ringförmiges Tragelement
- 14: Innenmantel
- 15: Lager des Tragelements
- 16: Kolben-Zylinder-Einheit
- 17: Zapfen
- 18: öffnung im Bereich Bodenabstich
- 19: Öffnung im Bereich Schlackeabstich
- 20: Einrichtung zur Möllerzufuhr
- 21: Schrottkorb
- 22: Vorrichtung zum Möllertransport
- 23: Schienenfahrzeug
- 24: Drehvorrichtung
- 25: Drehturm
- 26: Schienen
- 27: Endlosförderer
- 28: Aufnahmebereich
- 29: übergabebereich
- 30: metallurgisches Gefäß
- 31: Lichtbogenofen
- 32: Gefäßoberteil
- 33: Gefäßunterteil
- 34: Bodenabstich
- 35: Deckel
- 36: Gefäßrand
- 37: öffnungen
- 38: Verschlußvorrichtung
- 39: Kühlelement
- 40: Energieversorgungssation
- 41) 42) 43): Elektrode
- 44: Bodenelektrode
- 45: Transformatorenhaus
- 46: Stromzufuhr
- 50: Elektrodentrageinheit
- 51: Tragsäule
- 52: Elektrodentragarm
- 53: Fußende der Säule
- 54: Kolben-Zylinder-Einheit
- 60: Deckeltrageinheit
- 61: Hub- und Schwenkvorrichtung
- 62: Portalkran
- 63: Schwenkarm
- 70: Absaugung
- 71: Einhausung
- 72: torartige Öffnung
- 80: Gefäßwechselgefährt
- 81: Hubelemente
- 82: Fahrgestell
- 90: Stranggießanlage
- 91: Hüttenfahrzeug
- 92: Drehturm
- 93: Schmelzenpfanne
- 94: Hallenkran
- A: Arbeitsbereich
- E: Entleerungsposition
- I: Ofenmittenachse
- II: Längsachse
- III: Schwenkachse

## Patentansprüche

1. Stahlwerksanlage mit einem an einem ringförmigen Tragelement (13) befestigten, mit einem Deckel verschließbaren metallurgischen Gefäß (30), bestehend aus einem Gefäß oberteil (32) mit Deckel (35) und einem Gefäß unterteil (33) mit Bodenabstich (34), mit einer Einrichtung zum Zuführen der Charge und zum Abführen von schmelzflüssigem Material sowie von Gasen, mit einer Transportvorrichtung und mit einer Energieversorgungsstation, wobei das metallurgische Gefäß (30) ein mit einem Bodenabstich (34) versehener Lichtbogenofen (31) ist, und die Zuführeinrichtung (20) der Charge, insbesondere des Schrottes, eine Vorrichtung (22) ist, mit der der Schrott im Arbeitsbereich (A) der Transportvorrichtung (11) aufnehmbar und zu einer Entleerungsposition (E) oberhalb des Ofengefäßes (30) führbar ist,
dadurch gekennzeichnet,
daß das mit dem Deckel (35) verschließbare Gefäßoberteil (32) und das unterhalb des ringförmigen Tragelements (13) angeordnete Gefäßunterteil (33) des Lichtbogenofens (31) am Tragelement (13) lös- und auswechselbar befestigt sind,
daß in das Gefäß (32, 33) mindestens eine Elektrode (41) hineinragt, die von einer an dem ringförmigen Tragelement (13) befestigten Trageinheit (50) gehalten wird und daß das ringförmige Tragelement (13) über Zapfen (17) in Lagern (15) gelagert und um eine Achse (III) horizontal schwenkbar ist.

2. Stahlwerksanlage nach Anspruch 1,
**dadurch gekennzeichnet**,
daß die Vorrichtung (22) ein Schienenfahrzeug (23) ist, in das ein Schrottkorb (21) einhängbar ist.

3. Stahlwerksanlage nach Anspruch 1,
**dadurch gekennzeichnet**,
daß die Vorrichtung (22) eine Drehvorrichtung (24) ist, die als Drehturm (25) mit mindestens einen Tragarm ausgestattet ist, an dessen kopfseitigem Ende ein Schrottkorb (21) einhängbar ist.

4. Stahlwerksanlage nach Anspruch 1, dadurch gekennzeichnet, daß die Vorrichtung (22) ein Schienenfahrzeug (23) ist, mit dem der Tragring (13) an seiner Lagerung (15) aufnehmbar ist und der Lichtbogenofen (31) in den Arbeitsbereichen (A) des Hallenkranes (11) und von ihm wegbringbar ist.

5. Stahlwerksanlage nach Anspruch 1, dadurch gekennzeichnet, daß die Vorrichtung (22) ein Endlosförderer (27) mit einer Aufnahmestation (28) und einer übergabestation (29) ist.

6. Stahlwerksanlage nach Anspruch 1, dadurch gekennzeichnet, daß die Trageinheit (50) eine am Tragring (13) befestigte parallel zur Ofenmittenachse (I) geführte Säule (51) aufweist, an der ein Elektrodentragarm (52) angeordnet ist, welcher Über eine am vom Tragring (13) wegweisenden Fußende (53) der Säule (51) befestigte hydraulische Kolben-Zylinder-Einheit (54) bewegbar ist.

7. Stahlwerksanlage nach Anspruch 6, dadurch gekennzeichnet, daß die Säule (51) am Tragring (13) im Bereich des Bodenabstichs (34) des Gefäßunterteils (33) befestigt ist.

8. Stahlwerksanlage nach Anspruch 1, dadurch gekennzeichnet, daß der Deckel (35) durch eine Deckeltrageinheit (60) vom Gefäßrand (36) abhebbar und parallel zu ihm wegbewegbar ist.

9. Stahlwerksanlage nach Anspruch 8, dadurch gekennzeichnet, daß die Deckeltrageinheit (60) eine am Tragring (13) befestigte Hub- und Schwenkvorrichtung (61) ist.

10. Stahlwerksanlage nach Anspruch 8, dadurch gekennzeichnet, daß die Deckeltrageinheit (16) ein auf Schienen verfahrbarer Portalkran (62) ist.

11. Stahlwerksanlage nach Anspruch 1, dadurch gekennzeichnet, daß der Deckel (35) mindestens zwei verschließbare Öffnungen (37) aufweist, durch die die Charge bei auf dem Gefäßrand (36) aufliegendem Deckel (35) chargierbar ist.

12. Stahlwerksanlage nach Anspruch 11, dadurch gekennzeichnet, daß die Öffnungen (37) durch Klappen oder Schieber (38) verschließbar sind, die in einer eine Schleuse bildenden Weise zueinander angeordnet sind.

13. Stahlwerksanlage nach einem der vorstehenden Ansprüche, dadurch gekennzeichnet, daß der Lichtbogenofen (31) von einer Einhausung (71) umhüllt wird, die eine torartige öffnung (72) aufweist, durch die der Schrottkorb (21) zum Gefäßoberteil (32) hin- und wegbewegbar ist.

14. Stahlwerksanlage nach einem der vorstehenden Ansprüche, dadurch gekennzeichnet, daß am Gefäßunterteil (33) Hubelemente (81) eines Fahrzeugs (80) anordnenbar sind, mit dem das Gefäßunterteil (33) vom Tragring (13) wegbewegbar ist.

15. Stahlwerksanlage nach Anspruch 1, dadurch gekennzeichnet, daß das Gefäßunterteil (33) einen exzentrischen Bodenabstich (34) besitzt und an der Schwenkachse (III) des Tragrings (13) im rechten Winkel zur durch den Bodenabstich (34) führenden Längsachse (II) angeordnet ist.

16. Stahlwerksanlage nach Anspruch 1, dadurch gekennzeichnet, daß das Gefäßoberteil (32) aus von einem Kühlmedium durchströmten Kühlelementen gebildet wird, die koaxial zum Innenmantel (14) des Tragsrings (13) angeordnet sind.

17. Stahlwerksanlage nach Anspruch 16, dadurch gekennzeichnet, daß am Tragring (13) eine Kolben-Zylinder-Einheit (16) angreift, die sich auf der Stahlwerksbühne (12) abstützt und den am Tragring (13) befestigten Lichtbogenofen (31) schwenkt.

18. Stahlwerksanlage nach Anspruch 17, dadurch gekennzeichnet, daß der Angriffspunkt der Kolben-Zylinder-Einheit -Einheit (16) ein als Hebel ausgebildeter im Lager (15) gelagerter Zapfen (17) ist.

## Revendications

1. Installation pour fabriquer de l'acier, comportant un récipient métallurgique (30) fixé à un élément de support annulaire (13) et pouvant être fermé par un couvercle, constitué d'une partie supérieure de récipient (32) à couvercle (35) et d'une partie inférieure de récipient (33) à coulée de fond (34), un dispositif pour l'amenée de la charge et l'évacuation de la matière en fusion, ainsi que des gaz, un dispositif de transport et un poste d'alimentation en énergie, le récipient métallurgique (30) étant un four à arc électrique (31) muni d'une coulée de fond (34), et le dispositif d'amenée (20) de la charge, en particulier des ferrailles, étant un dispositif (22) grâce auquel les ferrailles peuvent être reçues dans la zone de travail (A) du dispositif de transport (11) et amenées vers une position de vidage (E) au-dessus du récipient de four (30),
caractérisée en ce que la partie supérieure de récipient (32) pouvant être fermée par le couvercle (35) et la partie inférieure de récipient (33), agencée au-dessous de l'élément de support annulaire (13), du four à arc électrique (31) sont fixées, de façon amovible et interchangeable, à l'élément de support (13), en ce que, dans le récipient (32,33) pénètre au moins une électrode (41) qui est maintenue par une unité de support (50) fixée à l'élément de support annulaire (13), et en ce que l'élément de support annulaire (13) est monté dans des paliers (15) par l'intermédiaire de tourillons (17) et peut pivoter horizontalement autour d'un axe (III).

2. Installation pour fabriquer de l'acier selon la revendication 1,
caractérisée en ce que le dispositif (22) est un véhicule sur rails (23) dans lequel peut être suspendu un panier de ferrailles (21).

3. Installation pour fabriquer de l'acier selon la revendication 1,
caractérisée en ce que le dispositif (22) est un dispositif tournant (24) qui, sous forme de tour rotative (25), est équipé d'au moins un bras de support à l'extrémité duquel, du côté de tête, peut être suspendu un panier de ferrailles (21).

4. Installation pour fabriquer de l'acier selon la revendication 1,
caractérisée en ce que le dispositif (22) est un véhicule sur rails (23) grâce auquel l'élément de support annulaire (13) peut être reçu dans ses paliers (15) et le four à arc électrique (31) peut être amené dans les zones de travail (A) de la grue de hangar (11) et éloigné de celle-ci.

5. Installation pour fabriquer de l'acier selon la revendication 1,
caractérisée en ce que le dispositif (22) est un transporteur sans fin (27) comportant un poste de réception (28) et un poste de transfert (29).

6. Installation pour fabriquer de l'acier selon la revendication 1,
caractérisée en ce que l'unité de support (50) présente une colonne (51) fixée sur l'élément de support annulaire (13) et guidée parallèlement à l'axe central du four (I), sur laquelle est agencé un bras de support d'électrode (52), lequel peut être déplacé par l'intermédiaire d'un vérin hydraulique (54) fixé à l'extrémité de pied (53) de la colonne (51) opposée à l'élément de support annulaire (13).

7. Installation pour fabriquer de l'acier selon la revendication 6,
caractérisée en ce que la colonne (51) est fixée à l'élément de support annulaire (13) dans la zone de la coulée de fond (34) de la partie inférieure de récipient (33).

8. Installation pour fabriquer de l'acier selon la revendication 1,
caractérisée en ce que le couvercle (35) peut être soulevé du bord de récipient (36) par une unité de support de couvercle (60) et être éloigné parallèlement à celui-ci.

9. Installation pour fabriquer de l'acier selon la revendication 8,
caractérisée en ce que l'unité de support de couvercle (60) est un dispositif de levage et de pivotement (61) fixé à l'élément de support annulaire (13).

10. Installation pour fabriquer de l'acier selon la revendication 8,
caractérisée en ce que l'unité de support de couvercle (16) est une grue à portique (62) déplaçable sur des rails.

11. Installation pour fabriquer de l'acier selon la revendication 1,
caractérisée en ce que le couvercle (35) présente au moins deux ouvertures (37) pouvant être fermées, à travers lesquelles la charge peut être chargée lorsque le couvercle (35) repose sur le bord de récipient (36).

12. Installation pour fabriquer de l'acier selon la revendication 11,
caractérisée en ce que les ouvertures (37) peuvent être fermées par des volets ou des coulisseaux (38), qui sont agencés l'un par rapport d'une façon formant un sas.

13. Installation pour fabriquer de l'acier selon une des revendications précédentes,
caractérisée en ce que le four à arc électrique (31) est enveloppé par un carter (71) qui présente une ouverture torique (72) à travers laquelle le panier de ferrailles (21) peut être déplacé vers la partie supérieure de récipient (32) et au loin de celle-ci.

14. Installation pour fabriquer de l'acier selon une des revendications précédentes,
caractérisée en ce que, à la partie inférieure de récipient (33), peuvent être agencés des éléments de levage (81) d'un véhicule (80), grâce auquel la partie inférieure de récipient (33) peut être éloignée de l'élément de support annulaire (13).

15. Installation pour fabriquer de l'acier selon la revendication 1,
caractérisée en ce que la partie inférieure de récipient (33) possède une coulée de fond excentrique (34) et est agencée sur l'axe de pivotement (III) de l'élément de support annulaire (13) à angle droit par rapport à l'axe longitudinal (II) traversant la coulée de fond (34).

16. Installation pour fabriquer de l'acier selon la revendication 1,
caractérisée en ce que la partie supérieure de récipient (32) est formée d'éléments de refroidissement traversés par un fluide de refroidissement, qui sont agencés coaxialement à l'enveloppe interne (14) de l'élément de support annulaire (13).

17. Installation pour fabriquer de l'acier selon la revendication 16,
caractérisée en ce qu'un vérin (16) s'engage sur l'élément de support annulaire (13), vérin qui s'appuie sur la plate-forme (12) de l'installation et fait pivoter le four à arc électrique (31) fixé à l'élément de support annulaire (13).

18. Installation pour fabriquer de l'acier selon la revendication 17,
caractérisée en ce que le point d'engagement du vérin (16) est un tourillon (17) monté dans le palier (15) et réalisé sous forme de levier.

## Claims

1. A steel-making plant with a metallurgical vessel (30), consisting of an upper vessel part (32) with cover (35) and a lower vessel part (33) with bottom taphole (34), which vessel is attached to an annular supporting element (13) and closable by a cover, with a means for feeding the charge and for removing molten material and gases, with a transport device and a power supply station, the metallurgical vessel (30) being an arc furnace (31) provided with a bottom taphole (34), and the means (20) for feeding the charge, in particular the scrap, being a device (22) by means of which the scrap can be taken up in the operating region (A) of the transport device (11) and can be guided to an emptying position (E) above the furnace vessel (30),
characterised in that the upper vessel part (32) which can be closed with the cover (35) and the lower vessel part (33) of the arc furnace (31) located beneath the annular supporting element (13) are attached to the supporting element (13) so as to be detachable and exchangeable,
that at least one electrode (41) projects into the vessel (32, 33), which electrode is held by a supporting unit (50) attached to the annular supporting element (13) and that the annular supporting element (13) is mounted in bearings (15) via trunnions (17) and is horizontally pivotable about an axis (III).

2. A steel-making plant according to Claim 1,
characterised in that the device (22) is a rail vehicle (23) in which a scrap basket (21) can be suspended.

3. A steel-making plant according to Claim 1,
characterised in that the device (22) is a rotary device (24) which is equipped as a revolving turret (25) with at least one supporting arm, on the head-side end of which a scrap basket (21) can be suspended.

4. A steel-making plant according to Claim 1,
characterised in that the device (22) is a rail vehicle (23) by means of which the supporting ring (13) can be held on its mounting (15) and the arc furnace (31) can be brought into the operating regions (A) of the shop crane (11) and away therefrom.

5. A steel-making plant according to Claim 1,
characterised in that the device (22) is an endless conveyor (27) with a receiving station (28) and a transfer station (29).

6. A steel-making plant according to Claim 1,
characterised in that the supporting unit (50) has a column (51) attached to the supporting ring (13) and guided parallel to the central axis (I) of the furnace, on which column an electrode supporting arm (52) is arranged which is movable via a hydraulic piston-cylinder unit (54) attached to the foot end (53) of the column (51) pointing away from the supporting ring (13).

7. A steel-making plant according to Claim 6,
characterised in that the column (51) is attached to the supporting ring (13) in the region of the bottom taphole (34) of the lower vessel part (33).

8. A steel-making plant according to Claim 1,
characterised in that the cover (35) can be lifted off the edge (36) of the vessel by a cover supporting unit (60) and can be moved away parallel thereto.

9. A steel-making plant according to Claim 8,
characterised in that the cover supporting unit (60) is a lifting and pivoting device (61) attached to the supporting ring (13).

10. A steel-making plant according to Claim 8,
characterised in that the cover supporting unit (16) is a portal crane (62) movable on rails.

11. A steel-making plant according to Claim 1,
characterised in that the cover (35) has at least two closable openings (37) through which the charge can be charged when the cover (35) is lying on the edge (36) of the vessel.

12. A steel-making plant according to Claim 11,
characterised in that the openings (37) can be closed by flaps or slides (38), which are arranged relative to each other in a manner forming a lock.

13. A steel-making plant according to one of the preceding claims, characterised in that the arc furnace (31) is surrounded by a doghouse (71) which has a gate-like opening (72) through which the scrap basket (21) can be moved towards and away from the upper vessel part (32).

14. A steel-making plant according to one of the preceding claims, characterised in that lifting elements (81) of a vehicle (80) can be arranged on the lower vessel part (33), by means of which the lower vessel part (33) can be moved away from the supporting ring (13).

15. A steel-making plant according to Claim 1,
characterised in that the lower vessel part (33) has an eccentric bottom taphole (34) and is located on the pivot axis (III) of the supporting ring (13) at right-angles to the longitudinal axis (II) which passes through the bottom taphole (34).

16. A steel-making plant according to Claim 1,
characterised in that the upper vessel part (32) is formed of cooling elements through which a cooling medium flows, which elements are arranged coaxially to the inner casing (14) of the supporting ring (13).

17. A steel-making plant according to Claim 16,
characterised in that a piston-cylinder unit (16) acts on the supporting ring (13), which unit is supported on the steelworks platform (12) and pivots the arc furnace (31) attached to the supporting ring (13).

18. A steel-making plant according to Claim 17,
characterised in that the point of action of the piston-cylinder unit (16) is a trunnion (17) designed as a lever and mounted in the bearing (15).
